# EUROPEAN PATENT SPECIFICATION

(11) **EP 3 863 403 B1**
(45) Date of publication and mention of the grant of the patent: **06.09.2023**
(21) Application number: 19798131.9
(22) Date of filing: 11.10.2019
(51) Int. Cl.: A01M 7/00, A01G 3/053

(54) **ROBOTIZED MACHINE WITH AUTOMATIC SYSTEM FOR MAINTENANCE OF A PERIMETER HEDGE**
ROBOTISIERTE MASCHINE MIT AUTOMATISCHEM SYSTEM ZUR WARTUNG EINER UMLAUFENDEN HECKE
MACHINE ROBOTISÉE AVEC SYSTÈME AUTOMATIQUE POUR L'ENTRETIEN D'UNE HAIE DE BORDURE

(30) Priority: 11.10.2018 IT 201800009353
(43) Date of publication of application: 18.08.2021
(73) Proprietor: Mediterranea Giardini di Orizio Davide, 22070 Vertemate Con Minoprio (IT)
(72) Inventor: ORIZIO, Davide, 22070 Vertemate Con Minoprio (IT)
(74) Representative: Modiano, Micaela Nadia
(86) International application number: PCT/IB2019/058693
(87) International publication number: WO 2020/075133

(56) References cited:
- DE-U1- 29 707 421
- FR-A1- 2 476 978
- FR-A1- 2 531 604
- FR-A1- 2 597 294
- FR-A1- 2 994 057

## Description

The present invention relates, in a first aspect thereof, to a method for keeping hedges tidy, trimmed and cleaned by using a robotized machine with interchangeable blades depending on the type of hedge and shaped like an inverted U in order to comprise within it the entire hedge. The machine might also assume the shape of an inverted L for hedges delimited by walls and/or enclosures.

WO2012/153264 discloses a modular electric robotized machine according to the preamble of claim 1.

The machine does not need to be operated by a technician and has a timer which allows it to operate automatically without an operator at preset times. The machine is powered by two motors with rechargeable batteries. Its path is traced and limited by a directional magnetic wire which is arranged perimetrically at the base of the hedge. The invention furthermore has, in a second aspect thereof, a tank inside which a pest control product is placed.

A high-pressure pump is connected to said tank and, by means of atomizers arranged around the machine, sprays the hedge during motion.

Once travel around the hedge has ended, the machine returns to the standby position within a shed in which it charges by means of a power outlet.

The machine is in any case provided with batteries, optionally rechargeable also with solar power, to be used where it is not possible to carry electric power to the ends of the hedge. A protective housing is arranged so as to cover the hedge trimming blades and is provided with sensors which, in case of rain or adverse atmospheric conditions, do not allow the machine to be activated to perform its functions. Additional sensors are arranged on the machine in order to allow it to stop in case of an unexpected obstacle, blocking the rotation of the hedge trimming blades. Furthermore, the blades are interchangeable, allowing the user to use the invention on any type of shrub. The machine, being electric, is extremely quiet. The background art in fact entails the use of manual hedge trimmers and uses various tools.

The most widely used one is the hedge trimmer controlled manually by an operator, which however does not perform a regular and linear trimming of the hedge. This requires a long time and produces a lot of waste of wood material. It uses gasoline or prepared mixtures for its operation, thus producing pollution.

For very large gardens, furthermore, it is necessary to hire workers who systematically trim the hedges, with often high costs.

A further method of the background art is the use of a carriage-mounted hedge trimming machine driven by an operator. This machine also uses gasoline and is very expensive and noisy.

It is in fact used to maintain hedges located in parks or gardens having very large areas. Finally, the constant maintenance of the hedges is a problem, and therefore by virtue of the present invention it is possible to always have perimeter hedges which are tidy and trimmed daily, to save effort and time in the usual and repetitive maintenance operations, to reduce the maintenance costs of the garden since the machine, being automatic, does not require an operator, and to use no other types of equipment.

Furthermore, the machine prevents and monitors the state of health of the plants by means of the integrated atomizing system used for pest control treatments.

The machine, powered with renewable energy by means of photovoltaic cells, being electric and therefore quiet, is ideal for those who live in residences and is advantageous for companies, private individuals or various organizations that annually must maintain large extensions of hedges with cuts which are always regular and linear. Furthermore, by virtue of the tank containing the pest control substance, the hedge is shielded from insects every day.

A not claimed aspect of the present invention consists in a method that is extremely effective and simple in order to allow customers, companies or organizations to be able to choose a machine that is adapted for their requirements on the basis of the height and length of the hedges to be maintained, by virtue of its inverted U or L shape, without the constant aid of an operator, reducing maintenance costs.

A not claimed aspect of the present invention is to provide a method of the indicated type that can guide the customer also in choosing the blades, depending on the shrub to be cut, and in particular to set the times and therefore the operating hours of the machine by virtue of an adjustable timer. Furthermore, if necessary, by virtue of the sensors (LED or infrared) that are present on the machine, the machine will not exit its charging shed or stall if the atmospheric conditions are adverse. By virtue of the timer, the operating hours can be changed according to the requirements.

A not claimed aspect of the present invention consists in a method of trimming the hedge which is traced and rendered uniform by means of the magnetic wire on which the machine performs its travel and on which it then returns to its charging stall, which as previously mentioned allows, by means of photovoltaic cells inserted thereon, to charge the batteries.

It is appropriate to know that the ground-located magnetic wire of the hedge allows to trim said hedge even if said hedge is not linear but has a different shape, for example horseshoe-shaped.

The impact prevention sensors also have the task of keeping the blades always at a distance that is sufficiently adequate for the perimeter of the hedge, so as to not allow inadequate trimming actions.

Another object of the present invention is to provide an apparatus which is complete with a tank and with a high-pressure pump which allows to spray the hedge during travel with pest control substances or other liquids.

Therefore, an object of the present invention is to provide an apparatus that is functionally simple and reliable and is made of materials, components and devices which are commercially and easily available and is so low in cost that it can be configured as a modular unit dedicated to each respective hedge in any operating environment.

The aim and aspects of the invention mentioned above are achieved with a modular machine according to claim 1. Preferred embodiments are presented in the dependent claims.

In order to better understand the functional aspects of the invention, reference is made to a detailed description of the drawings.

The characteristics and advantages of the apparatus of the present invention will become better apparent in the embodiment illustrated by way of nonlimiting example in the accompanying drawings, wherein:

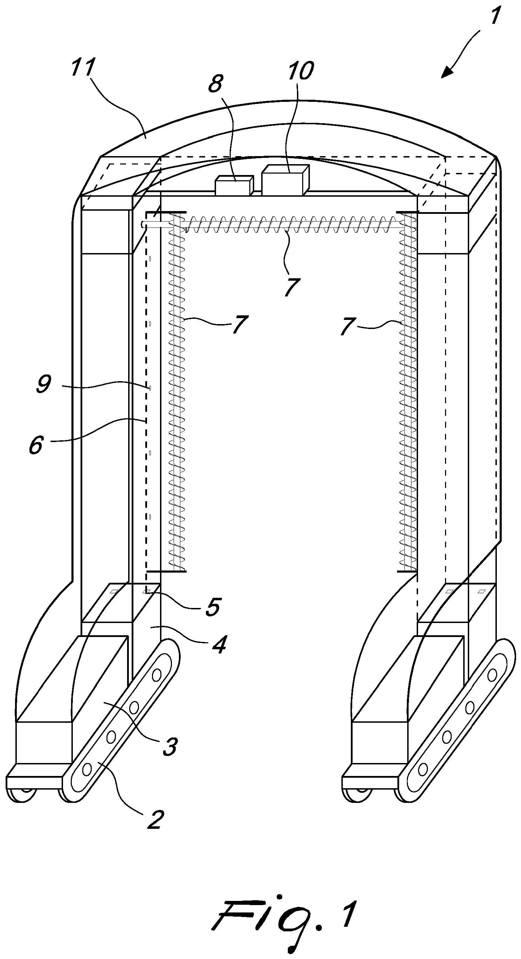

Figure 1 is a front view of the machine 1 in its inverted U-shaped form and of its components. All the components of the machine can be disassembled easily in order to perform any type of ordinary and extraordinary maintenance, of which:
- base 2 provided with tracks or wheels or other devices which allow the machine to move on any type of terrain;
- electric motors 3 arranged on tracks 2, which also can be disassembled for any maintenance;
- batteries 4 with the corresponding electric terminals which optionally can be removed to recharge them if there are no electrical outlets which can be installed within the corresponding storage stall 20 of the machine;
- outlets 5 for automatic charging, which is obtained by means of photovoltaic cells inserted on the charging stall 20;
- electric power carrying cables 6, which extend from the motors 3 along the horizontal and vertical axes of machine in order to carry electric power required by the rotors of blades 7 and to a high-pressure pump 8;
- the hedge trimming blades 7 also can be removed easily to be changed where necessary with different blades according to the type of shrub;
- atomizers 9 arranged in such a manner as to allow the spraying of the pest control substances or other liquids for plants on the hedge;
- tank 10, containing pest control products or other liquids, which also can be removed for cleaning or for maintenance when necessary;
- the high-pressure pump 8 is adjustable in terms of pressure and can be removed easily;
- housing 11 made of rigid and lightweight plastic, suitable for protection of any wood chips and of any electrical short circuits according to national and European protection requirements, since it grounds the entire machine.

The sensors for canceling automatic start in case of adverse weather conditions and additional sensors which switch off the machine in case of unexpected obstacles are also located on the housing 11.

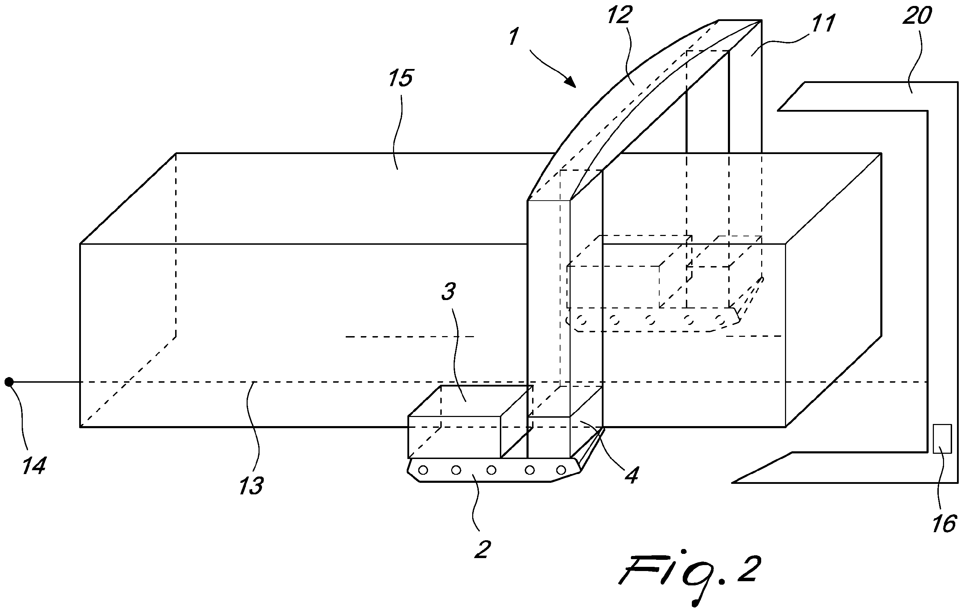

Figure 2 is a side view of the machine 1 which highlights its inverted U-shape and the characteristic of wrapping around the entire hedge on its three sides in order to allow uniform and linear trimming.

The reference numeral 12 designates the upper part of the machine.

The reference numeral 13 designates a magnetic wire for the directional control of the machine.

The reference numeral 14 designates a travel end and reversal sensor of the path at the end of which the machine becomes inactive and charges in its stall 20.

The reference numeral 15 schematically designates a hedge around which the machine 1 passes.

The reference numeral 20 designates the stall for sheltering the machine and for charging the batteries at the end of work.

The reference numeral 16 designates an electric power outlet, if the user has the possibility to arrange it and install it.

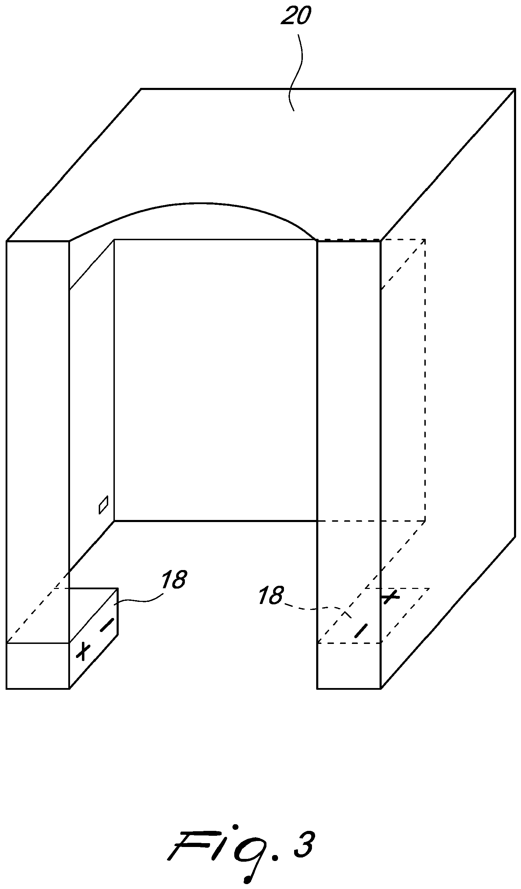

Figure 3 allows to deduce the entry in the storage stall 20 of the machine 1, on which the photovoltaic cells can be installed, and the charging outlets 18 for the batteries of said machine.

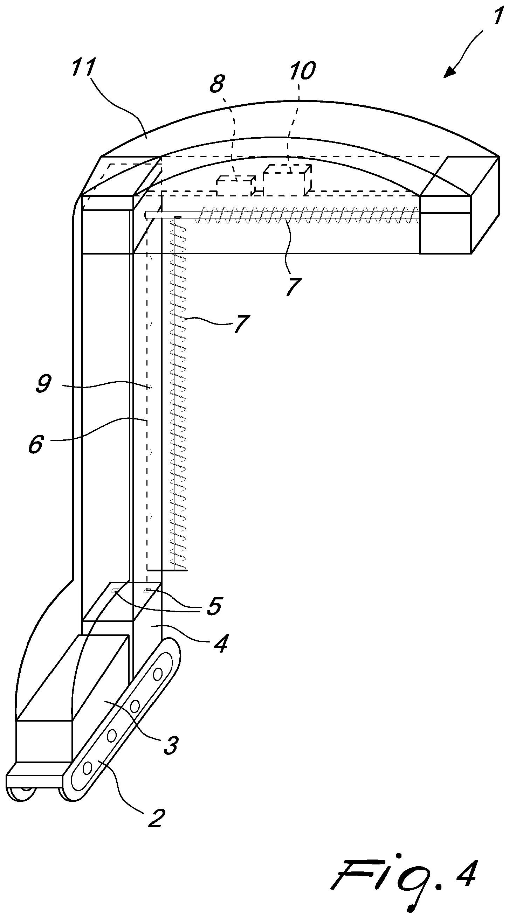

Figure 4 is a view of machine, in its inverted L-shaped configuration, which can be used if one wishes to trim hedges only on two sides, and upper one and a lateral one, since the hedge is delimited by walls and/or enclosures.

Furthermore, the machine 1 optionally comprises an adjustable timer for storing operating times of the machine.

Furthermore, the machine according to the invention comprises impact prevention sensors and sensors for maintaining the appropriate distances from the hedges 15.

From Figure 1 described earlier one deduces that the machine can be easily disassembled both for ordinary and extraordinary maintenance and to order from the manufacturer spare parts for the machine, which is adaptable in terms of height and width according to the hedge 15 that one intends to maintain. The height and width of the machine 1 are in fact obtained both by adding or removing simply the blades 7, and the housing 11 with its sensors can be adapted easily to multiple size measurements. The protective housing 11 can thus be ordered in multiple sizes in order to always have the machine ready for its use. All the accessories of the present invention can be purchased easily and are economically advantageous. The magnetic wire 13 also can be purchased in different lengths since if there are multiple hedges 15 in a same garden the machine 1 can trace such a path as to reach a second hedge or multiple hedges 15.

Thus, the machine 1, once it has reached the travel end sensor 14, returns in reverse by means of an impulse until it reaches its charging stall 20.

From the above it is evident that the invention fully achieves the intended aim and objects.

The invention has provided a new and inventive apparatus which can be applied to all types of hedge and improves life since it does not require any operator to perform its work, differently from the background art.

The machine is quiet, since it is electric, and therefore solves the noise pollution and environmental problems in general, since it is also provided with photovoltaic cells which allow its use. The photovoltaic cells can be inserted on the charging stall and the batteries are also provided with an inverter for converting from DC voltage to AC voltage if one wishes to charge them within a domestic environment. It is furthermore possible to set a working time by means of a timer. It does not produce excessive biological material to be disposed, since it might work multiple times per day; daily maintenance of the hedge in fact allows to not have problems related to borders and improves aesthetically the appearance of the dwelling or of the location, due to the fact that in addition to having a perfect hedge all year round the enclosures do not overlap the growth of said hedges.

Finally, and not least, timely and systematic control of the pest control substance distributed by the atomizers acts systematically on the parasites and pathogens of the hedge.

Thus, the invention is limited by the scope of the claims.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A modular electric robotized machine (1) with an inverted U- or L-shaped configuration, **characterized by** a modular calibrated automatic apparatus for hedge maintenance (15), which is assembled monolithically, does not require an operator and operates in compliance with the safety requirements and comprises the following components:
a) one or two electric motors (3) powered by means of a battery (4);
b) rechargeable batteries (4);
c) tracks or wheels (2) which can be adapted to any type of terrain;
d) interchangeable hedge trimming blades (7);
e) atomizers for a pest control substance (9);
f) tank (10) for a pest control substance;
g) high-pressure pump (8);
h) protective housing (11) containing sensors for inactivation in case of bad weather;
i) sensors for impact prevention and for keeping the appropriate distances from the hedges;
j) adjustable timer for storing operating times of said machine;
k) magnetic wire (13) for marking the path with travel limit sensors (14).

2. The modular machine according to claim 1, **characterized in that** every individual component thereof can be disassembled.

3. The modular machine according to claim 1 or 2, which is electric and silent and provided with a tank and atomizers for a pest control substance.

4. The modular machine according to any preceding claim, **characterized in that** the blades (7) can be replaced according to the type of shrub that one intends to cut.

5. The modular machine according to one or more of claims 1 to 4 provided with a stall (20) for work end storage.

6. The modular machine according to one or more of claims 1 to 5, **characterized in that** all of its components are integrated in a single robotized operating logic module configured to perform its automatic functions.

7. The modular machine according to claim 6, adaptable to any type of hedge both in terms of height and in terms of width.

## Patentansprüche

1. Eine modulare elektrische robotisierte Maschine (1) in der Konfiguration eines umgekehrten Us oder Ls, **gekennzeichnet durch** eine modulare kalibrierte automatische Vorrichtung zur Wartung einer Hecke (15), die monolithisch aufgebaut ist, keinen Bediener benötigt, gemäß den Sicherheitsanforderungen arbeitet und folgende Komponenten umfasst:
a) einen oder zwei Elektromotoren (3), angetrieben durch eine Batterie (4);
b) wieder aufladbare Batterien (4);
c) Bahnen oder Räder (2), die an jede Art von Terrain angepasst sein können;
d) austauschbare Heckenschneidemesser (7);
e) Zerstäuber für eine Schädlingskontrollsubstanz (9);
f) Tank (10) für eine Schädlingskontrollsubstanz;
g) Hochdruckpumpe (8);
h) Schutzgehäuse (11), das Sensoren zur Inaktivierung bei schlechtem Wetter enthält;
i) Sensoren zur Aufprallprävention und zum Einhalten der korrekten Abstände von den Hecken;
j) einstellbaren Timer zum Speichern der Betriebszeiten der Maschine;
k) Magnetdraht (13) zum Markieren des Weges mit Wegbegrenzungssensoren (14).

2. Die modulare Maschine gemäß Anspruch 1, **dadurch gekennzeichnet, dass** jede einzelne Komponente davon ausgebaut werden kann.

3. Die modulare Maschine gemäß Anspruch 1 oder 2, die elektrisch und leise und mit einem Tank und Zerstäubern für eine Schädlingskontrollsubstanz ausgestattet ist.

4. Die modulare Maschine gemäß einem beliebigen Anspruch, **dadurch gekennzeichnet, dass** die Messer (7) je nach Art des Busches, den man schneiden möchte, ausgetauscht werden können.

5. Die modulare Maschine gemäß einem oder mehreren der Ansprüche 1 bis 4, ausgestattet mit einer Station (20) zur Aufbewahrung nach der Arbeit.

6. Die modulare Maschine gemäß einem oder mehreren der Ansprüche 1 bis 5, **dadurch gekennzeichnet, dass** alle ihre Komponenten in ein einziges robotisiertes Arbeits-Logikmodul integriert sind, das konfiguriert ist, um ihre automatischen Funktionen auszuführen.

7. Die modulare Maschine gemäß Anspruch 6, anpassbar an jede Art von Hecke, sowohl in Bezug auf die Höhe als auch in Bezug auf die Breite.

## Revendications

1. Machine robotisée électrique modulaire (1) ayant une configuration en L ou en U inversé, **caractérisée par** un appareil automatique calibré modulaire pour l'entretien des haies (15), qui est assemblé de façon monolithique, ne nécessite pas d'opérateur et qui fonctionne en accord avec les normes de sécurité et comprend les composants suivants :
a) un ou deux moteurs électriques (3) alimentés au moyen d'une batterie (4) ;
b) des batteries rechargeables (4) ;
c) des chenilles ou des roues (2) qui peuvent être adaptées à n'importe quel type de terrain ;
d) des lames de taillage de haie interchangeables (7) ;
e) des pulvérisateurs pour un produit antiparasitaire (9) ;
f) un réservoir (10) pour un produit antiparasitaire ;
g) une pompe à haute pression (8) ;
h) un boîtier protecteur (11) contenant des capteurs pour une désactivation en cas de mauvais temps ;
i) des capteurs pour prévenir les chocs et pour maintenir les distances appropriées par rapport aux haies ;
j) un minuteur réglable pour stocker les temps de fonctionnement de ladite machine ;
k) un fil magnétique (13) pour marquer le chemin avec des capteurs de limite de déplacement (14).

2. Machine modulaire selon la revendication 1, **caractérisée en ce que** chaque composant individuel de celle-ci peut être démonté.

3. Machine modulaire selon la revendication 1 ou 2, qui est électrique et silencieuse et est pourvue d'un réservoir et de pulvérisateurs pour un produit antiparasitaire.

4. Machine modulaire selon l'une quelconque des revendications précédentes, **caractérisée en ce que** les lames (7) peuvent être remplacées selon le type d'arbuste que l'on souhaite couper.

5. Machine modulaire selon l'une ou plusieurs des revendications 1 à 4, pourvue d'un bac (20) pour un stockage de fin de travail.

6. Machine modulaire selon l'une ou plusieurs des revendications 1 à 5, **caractérisée en ce que** tous ses composants sont intégrés dans un seul module logique de fonctionnement robotisé configuré pour réaliser ses fonctions automatiques.

7. Machine modulaire selon la revendication 6, adaptable à n'importe quel type de haie, que ce soit pour la hauteur ou la largeur.
